# EUROPEAN PATENT SPECIFICATION

(11) **EP 2 826 620 B1**
(45) Date of publication and mention of the grant of the patent: **03.07.2019**
(21) Application number: 14177286.3
(22) Date of filing: 16.07.2014
(51) Int. Cl.: B32B 27/12, B32B 3/28, B32B 5/02, B32B 7/12, E04D 12/00

(54) **An under tile multilayer sheet for waterproofing a roof of a building, wherein said roof includes a metal roof covering.**
Mehrschichtfolie als Unterdeckbahn zur wasserdichten Abdeckung eines Daches eines Gebäudes wobei das Dach eine Metalldach enthält.
Une sous couche multicouche pour l'imperméabilisation d'un toit d'un bâtiment dans lequel ledit toit comporte une couverture de toit métallique.

(30) Priority: 17.07.2013 IT MI20131195
(43) Date of publication of application: 21.01.2015
(73) Proprietor: Silcart S.p.A., 31030 Carbonera, Frazione Mignagola TV (IT)
(72) Inventor: Faotto, Ugo, I-31030 Carbonera, TREVISO (IT)
(74) Representative: Mozzi, Matteo

(56) References cited:
- EP-A2- 1 234 927
- WO-A1-2013/135682
- WO-A2-2009/105464
- DE-A1- 2 045 824
- DE-U1- 29 912 975
- GB-A- 2 428 631
- US-A- 3 142 599
- US-A- 4 977 721
- US-A1- 2005 064 172
- US-A1- 2013 247 490

## Description

### Technical field

The present invention relates to an under-tile multilayer sheet for waterproofing roofs of buildings. Particularly, the invention relates to a multilayer sheet for roofs comprising a metal roof covering formed, for example, by metal roofing-tiles or similar metal covering elements.

### Background

As it is known, in the manufacturing of roofs or similar covering of buildings, it is necessary to insert sheets capable of making the roofs impermeable to water, and permeable or impermeable to water vapor, as well as to ensure a suitable thermal insulation of the building.

Generally, waterproofing under-tile sheets are located in ventilation compartments of a roof, which are arranged below the covering tiles.

In the case of roofs comprising a roof covering obtained by using metal roofing-tiles, such sheets are positioned above an insulating layer or panel laid on a planking of the roof. In such a manner, the sheets are sandwiched between such insulation layer and the roof covering of the roof formed by the metal covering. In fact, the metal covering is laid onto the sheets.

However, the roofs of buildings that use metal roofing-tiles, plates, and, generally, the roofs provided with metal coverings arranged above the above-mentioned waterproofing sheets have some drawbacks.

Particularly, when the air under the metal covering of the roof reaches the temperature and moisture conditions that are near to the dew point, the water vapor saturating the air condensates, at a constant pressure, thus generating water drops that coagulate, particularly, on the face of the metal roofing-tiles facing the underlying sheet.

Such condensation water is potentially detrimental to the metal roofing-tiles of the roof, since it tends to corrode them. Furthermore, the condensed water drops falling onto the sheet arranged under the metal roof covering facilitate the growth of moulds that may cause decaying effects to the wood structures of the roof and damage the thermal insulation.

WO 2009/105464 A2 describes a underlay for the waterproofing of a roof made by using an embossed foil coupled by heating or other methods to a supporting layer of fabric or non-woven fabric.

EP 1234927 A2 describes a foil embossed as it is applied at the level of the roof for ventilation and drainage. The bosses have a truncated conical shape and are equipped with reinforcements to resist compression.

In order to obviate such drawback, waterproofing sheets with multiple layers are known, which are made of synthetic materials, generally located under the metal roofing-tiles in order to drain the condensation water forming thereon. However, such sheets of a known type are not very efficient, since the tridimensional structure of a sheet layer in contact with the metal roofing-tiles, which should ensure the draining function, is actually subjected to decaying phenomena over time, which compromise the sheet function.

### Summary of the invention

An object of the present invention is to devise and provide an under-tile multilayer sheet for waterproofing roofs of buildings, in particular for waterproofing roofs comprising a metal roof covering, which is improved, allowing at least partially obviating the drawback set forth herein above with reference to the solutions of sheets for roofs with metal coverings of a known type.

Such an object is achieved by an under-tile multilayer sheet for waterproofing roofs of buildings in accordance with claim 1.

Alternative embodiments of such a sheet are described in the dependent claims.

It is the object of the present invention also a structure of a building roof that employs the under-tile sheet of the invention in accordance with claim 19.

### Brief description of the drawings

Further characteristics and advantages of the under-tile sheet according to the present invention will be apparent from the description set forth below of preferred embodiments, given by way of illustrative, non-limiting example, with reference to the appended Figures, in which:
- **Fig. 1** illustrates, in a perspective, exploded view, a portion of an under-tile sheet for roofs with metal roof covering according to a first embodiment of the invention;
- **Fig. 2** illustrates, in a perspective, exploded view, a portion of an under-tile sheet for roofs with metal roof covering according to a second embodiment of the invention;
- **Fig. 3** shows an enlarged, sectional view of a polymeric material foil of the sheets of Figs. 1 and 2 in a first embodiment of such foil;
- **Fig. 4** shows an enlargement of a top view of a portion of the polymeric foil of the sheets of the invention in a second embodiment of such foil;
- **Fig. 5** shows an enlargement of a top view of a portion of the polymeric foil of Fig. 3;
- **Figs. 6** and **7** illustrate partially open perspective views of embodiment examples of roofs of a building provided with a metal roof covering that comprise the waterproofing sheets of the invention.

### Detailed description

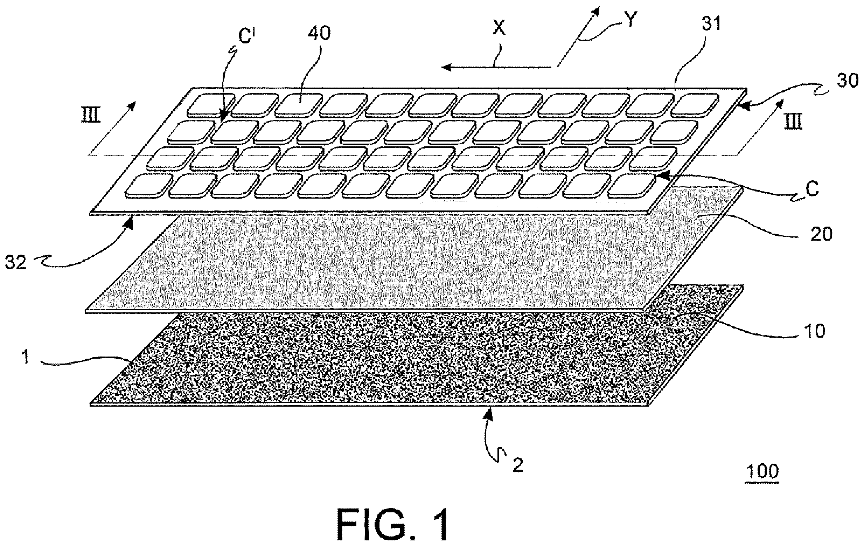

With reference to the above-mentioned Figs. 1-5, an under-tile multilayer sheet for waterproofing roofs of buildings or similar coverings according to the invention and in two embodiments, is generally indicated with the numeral references 100, 200. In the above-mentioned Figs. 1-5, identical or similar elements are indicated by the same numeral references.

Particularly, the under-tile sheet 100, 200 can be positioned under a metal roof covering of the roof comprising, for example, metal roofing-tiles, plates, or similar metal covering elements.

Herein below, by the terms "sheet for waterproofing" or "waterproofing" sheet, a sheet will be meant, which is configured so as to be water-proof.

Furthermore, herein below, the under-tile multilayer sheet 100, 200 of the invention will be also referred to under-tile sheet or, simply, sheet.

With reference to Fig. 1, in a first embodiment, the under-tile sheet 100 comprises three layers. Particularly, such sheet 100 comprises a reinforcement layer 10 having a face 1 and a further opposite face 2. In an embodiment, such reinforcement layer 10 is made in a fibrous material.

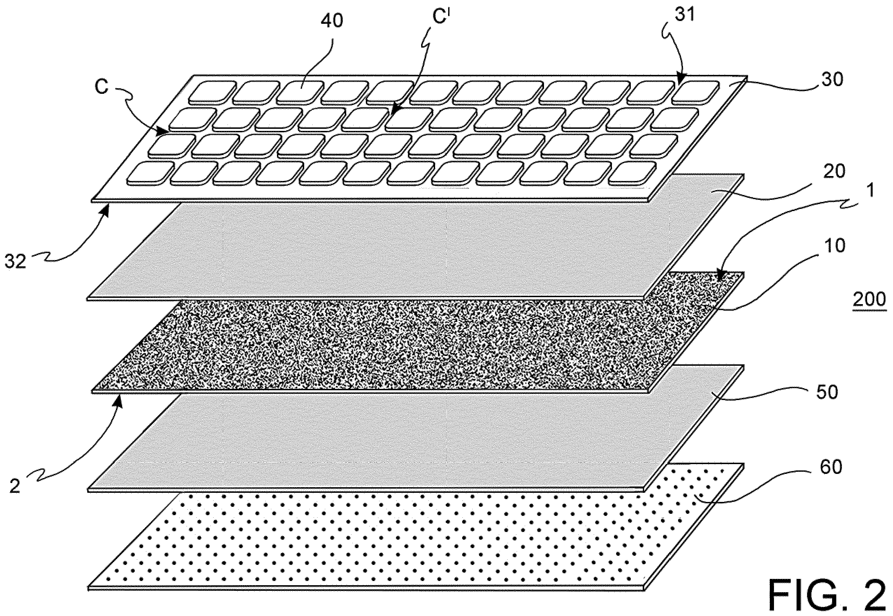

Furthermore, the sheet 100 comprises a first adhesive membrane layer 20 or, simply, first adhesive membrane connected to one of the faces, for example, the face 1 of the reinforcement layer 10. In an embodiment, the above-mentioned first adhesive membrane 20 is connected to at least one part of the surface of the face 1 of the reinforcement layer 10. In the example of the Figs. 1 and 2, the adhesive membrane 20 is connected to the entire surface of the face 1.

The reinforcement layer 10 is made of a fibrous material selected from the group consisting in:
- a synthetic fabric or non-woven synthetic fabric, such as, for example, polypropylene (PP), polyethylene terephthalate (PET);
- glass fiber;
- a synthetic composite fabric or non-woven synthetic composite fabric;
- a natural fabric or non-woven natural fabric;
- a fibrous mesh.

In a further embodiment, the reinforcement layer 10 comprises a polymeric material film.

For example, the reinforcement layer 10 has a weight in grams per square meter ranging between 30 and 200 g/m².

In order to increase the water draining power of the reinforcement layer 10, i.e., the hydrophilicity of such layer, the latter is subjected to suitable treatments. For example, the already-formed fibrous reinforcement layer 10 can be surface treated with chemicals such as, for example, super absorbent powders (SAPs) of a known type, or by adding such substances to the fibers that will form the reinforcement layer 10. Furthermore, the already-formed reinforcement layer 10 or the corresponding fibers will be able to be subjected to other known treatments, such as, for example, plasma treatments.

The first adhesive membrane 20 is produced by an adhesive polymeric blend comprising bitumen, polymers, and a filler.

Other examples (not according to the invention) of polymeric blends with adhesive properties include: hot-extruded polyolefins; hot mixture of ethylene vinyl acetate (EVA) and rubber-based polymers; acrylic, vinyl resins and the like in an aqueous dispersion or added with a solvent.

It shall be noticed that the reinforcement layer 10 is suitable to impart to the sheet 100 a mechanical strength to tearing, crushing, and traction.

The first adhesive membrane 20 acts as a bonding agent for the adhesion of the different layers composing the sheet 100. Such first adhesive membrane 20 is water-impermeable, therefore, it imparts to the sheet 100 waterproofing properties. Furthermore, such first membrane 20 is configured to increase the sheet 100 mechanical strength, and, on the whole, it increases the durability over time thereof.

In a preferred embodiment, the under-tile sheet 100 comprises a polymeric material foil 30 connected to the first adhesive membrane 20. In other words, the first membrane 20 is sandwiched between the reinforcement layer 10 and the foil 30 in a polymeric material. Such polymeric foil 30 has a structure such as to ensure a suitable flexibility degree to the sheet 100 further allowing that the same can be rolled. Such polymeric foil 30 comprises a first face 31 opposite a second face 32 adjacent to the first adhesive membrane 20.

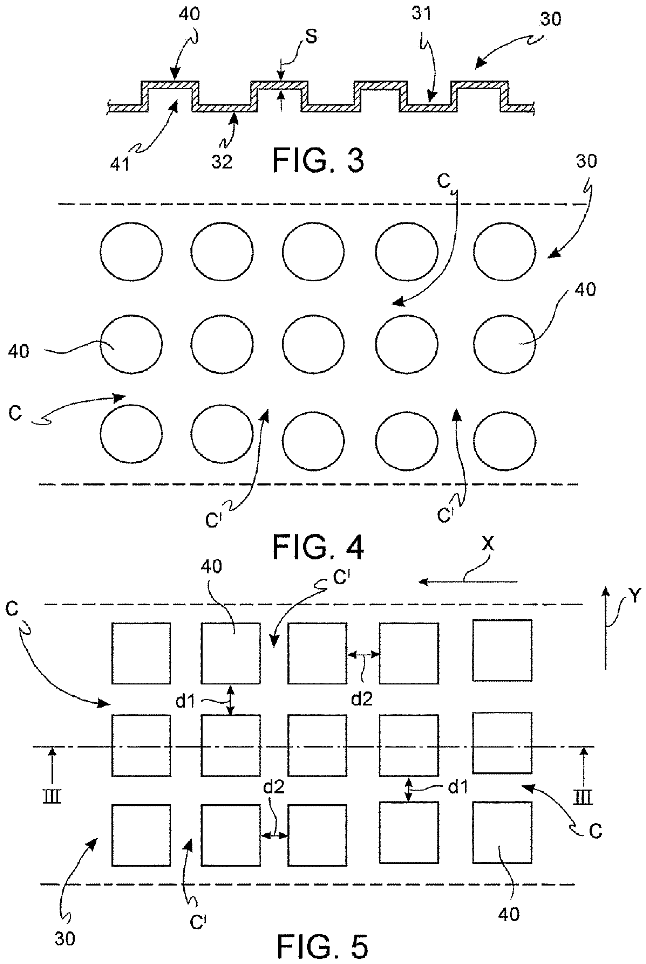

Particularly, with reference to Fig. 1, the foil 30 comprises a plurality of reliefs 40 or bumps on the above-mentioned first face 31. In the example of the Figs. 1 and 3, the foil 30 comprises such reliefs 40, or bumps, protruding from the first face 31 of the foil 30 itself, in a direction moving away from the first adhesive membrane 20.

A section of the foil 30 in a polymeric material of the sheet 100 obtained with a plane orthogonal to the same foil (as illustrated in the Figs. 1 and 5) in the direction of the arrows III is shown in Fig. 3. Such foil 30 comprises a plurality of recesses 41 on the second face 32. Each recess 41 is arranged at a corresponding relief 40 of the first face 31 of the foil 30.

With reference to Fig. 5, in an embodiment, each relief 40 of the first face 31 of the foil 30 has a section with a plane parallel to the foil 30 having a substantially squared shape. In another example, with reference to Fig. 4, the section of each relief 40 has a substantially circular shape. It shall be noticed that the advantages of the invention are also achieved with different shapes of the reliefs 40 sections, for example, with reliefs 40 having a rectangular, triangular, rhomboidal section, and the like.

Completely similar considerations also apply to the recesses 41 of the second face 32, each of which corresponds to a corresponding relief 40.

In an embodiment example, with reference to the Figs. 1 and 5, the reliefs 40 of the first face 31 of the foil 30 are aligned along a first direction X indicated by a corresponding arrow to form a plurality of rows that are substantially mutually parallel along such first direction X. Similarly, such reliefs 40 are aligned along a second direction Y orthogonal to the first direction X indicated by the corresponding arrow to form a plurality of columns that are substantially mutually parallel. Such rows and columns along the first X and the second Y directions, respectively, form a matrix structure of reliefs 40. Similar considerations also apply to the recesses 41 of the second face 32 of the foil 30.

Referring again to the example of Fig. 5, each row of reliefs 40 of the first face 31 of the foil 30 is arranged at a first distance d1 from the adjacent rows. Such first distance d1 is, for example, in the range of about 3mm-2cm.

Furthermore, each column of reliefs 40 of the first face 31 of the foil 30 is arranged at a second distance d2 from the adjacent columns. Such second distance is, for example, in the range of about 3mm-2cm.

In view of the above, the polymeric foil 30 comprises, on the first face 31, a plurality of parallel channels C/C' defined by the rows/columns of bumps 40. Such channels C, C' advantageously ensure the outflow of the condensation water that may build up under the metal roof covering of the roof when the air under the metal covering reaches particular temperature, pressure, and humidity conditions. In this manner, a constant contact between the metal roofing-tiles and such condensation water is avoided.

It shall be noticed that the examples of the Figs. 1-5 show the bumps 40 on the first face 31 of the foil 30 distributed along substantially rectilinear directions, in which the corresponding channels C, C' are also substantially rectilinear. However, other arrangements of the bumps 40 are possible without departing from the advantages of the present invention. For example, the bumps 40 can be distributed on the first face 31 so that the channels C, C' are curvilinear.

It shall be noticed that the foil 30 in a polymeric material of the sheet 100 has, for example, a thickness S ranging between about 40µm and 3mm.

Furthermore, the reliefs 40 of the first face 31 of the foil 30 protrude in direction substantially orthogonal to the first face 31 and have an average length ranging between about 2mm and 2cm.

It shall be noticed that the above-mentioned polymeric material, with which the foil 30 is made, is selected from the group consisting in:
- high-density polyethylene, or HDPE;
- low-density polyethylene, or LDPE;
- polypropylene (PP);
- polyethylene terephthalate (PET);
- polystyrene (PS);
- polyamide (PA);
- other polymers.

Furthermore, the polymeric material with which the foil 30 is made, is also such as to make the sheet 100 water-impermeable.

With reference to Fig. 2, in a second embodiment, the under-tile waterproofing sheet 200 comprises the above-mentioned reinforcement layer 10, for example in a fibrous material, the first adhesive polymeric membrane, 20 and the polymeric foil 30. In addition, the sheet 200 comprises a second adhesive polymeric membrane 50 connected to the further face 2 of the reinforcement layer 10, for example, on all or part of the surface of such further face. Such second membrane 50 is similar to the first membrane 20.

Furthermore, the sheet 200 comprises a further layer 60 connected to the second adhesive membrane 50, so that the second membrane 50 is sandwiched between the reinforcement layer 10 and such further layer 60. Such further layer 60 represents an outer finishing layer of the sheet 200. In an embodiment, such finishing layer 60 is in a fibrous material. In another embodiment example, such finishing layer 60 comprises a polymeric film. In these two examples, the finishing layer 60 of the sheet 200 has a weight in grams per square meter ranging, for example, between 10 and 80 g/m².

In still another example, such finishing layer 60 comprises a nonstick mineral layer. In this case, particularly, the finishing layer 60 comprises an inert material layer (such as, for example sand, grit, slate). In such a case, the finishing layer 60 of the sheet 200 has a weight in grams per square meter ranging, for example, between 100 and 500 g/m².

Since it is a finishing layer of the sheet 200 having a mainly aesthetical function, such finishing layer 60 can be manufactured in different colors. Furthermore, similarly to the reinforcement layer 10, such finishing layer 60 can also be subjected to suitable treatments to increase the water draining ability (hydrophilicity), i.e., SAP powder or plasma treatments.

Such finishing layer 60, when it is in a fibrous material, is manufactured in a material selected from the group consisting in:
- a synthetic fabric or non-woven synthetic fabric;
- a composite fabric or non-woven composite fabric;
- a natural fabric or non-woven natural fabric.

As regards a manufacturing process of the under-tile sheet 200 of the invention, the polymeric blend that will form the first 20 and the second 50 adhesive membranes is spread on the reinforcement layer 10, for example, made of a polyester or glass fiber non-woven fabric, on both opposite faces 1,2.

The foil 30 that is pre-formed, for example, by moulding, provided with the reliefs 40 is then applied onto the polymeric blend that will form the first membrane 20. Particularly, the second face 32 of the foil 30 adheres to the face 1 of the reinforcement layer 10 exploiting the adhesive property of the unsolidified polymeric blend in order to bind the polymeric foil 30 to the reinforcement layer 10.

Similarly, the finishing layer 60, for example, in a fibrous material, is applied by lamination onto the polymeric blend that will form the second adhesive membrane 50, adhering to the further face 2 of the reinforcement layer 10 on the entire surface.

In the case that the manufacturing of the sheet 100 of the example of Fig. 1 is desired, only the face 1 of the reinforcement layer 10 is spread with the polymeric blend that will form the first adhesive membrane 20.

The pre-formed foil 30 is then applied by lamination onto such polymeric blend and the second face 32 of the foil 30 adheres to the face 1 of the reinforcement layer 10 by virtue of the adhesive property of the unsolidified blend itself, so as to bind the foil 30 to the reinforcement layer 10.

In a further embodiment, the sheet of the invention comprises a reinforcement layer 10, for example, comprising a film in a polymeric material, a first adhesive membrane layer 20, connected to the face 1 of the reinforcement layer 10, and the polymeric foil 30 with bumps. For example, the first adhesive layer 20 comprises a bonding agent to adhere the foil 30 with bumps to the film of the reinforcement layer 10.
The sheet further comprises a second adhesive membrane layer 50 connected to the further face 2 of the reinforcement layer 10 and the fibrous finishing layer 60 connected to such secondo adhesive membrane layer 50, so that such adhesive layer 50 is sandwiched between the reinforcement layer 10 and the finishing layer 60. Such second adhesive layer 50 comprises, for example, a bonding agent, to adhere by lamination the finishing layer 60 to the film of the reinforcement 10 layer. Alternatively, the fibrous finishing layer 60 is laminated to the film of the reinforcement layer 10 by thermal or ultrasound welding processes.

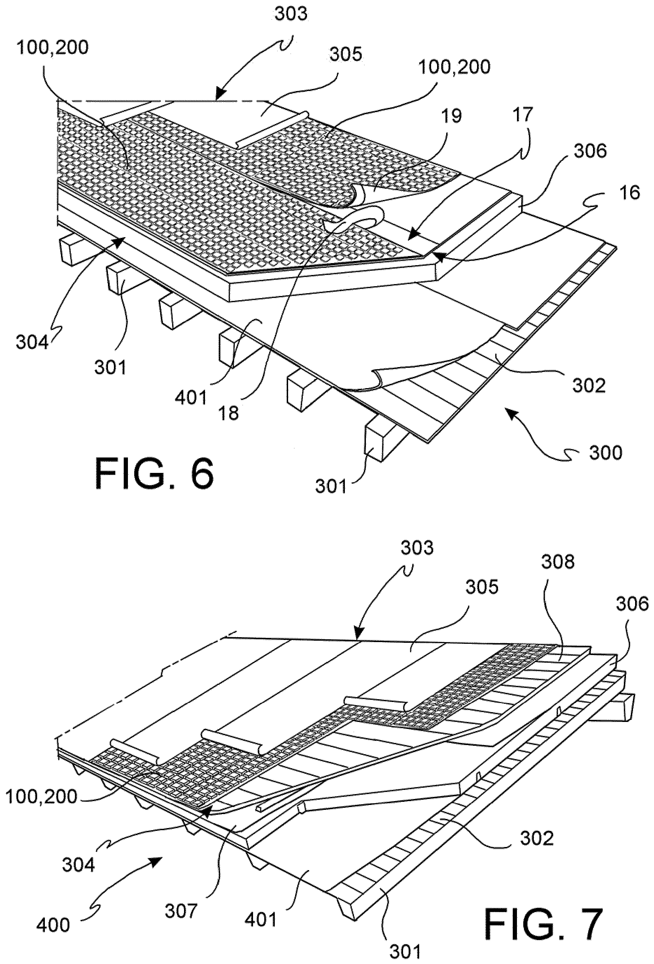

With reference to the Figs. 6 and 7, it is possible to describe examples of a structure of a roof 300, 400 of a building comprising the waterproofing under-tile sheets 100, 200 of the invention. In the above-mentioned Figs. 6 and 7, the like or similar elements are indicated with the same numeral references.

In a first example, the roof 300 comprises a main supporting structure of the roof itself, which includes a plurality of beams 301 that are mutually parallel and arranged sloping. Such beams 301 are manufactured, for example, in wood, cement, or other materials. The beams 301 are surmounted by a planking 302, for example, made of wood, obtained by suitable joints of the male-female type, secured to the same beams 301.

The roof 300 further comprises a metal roof covering 303 comprising, for example, metal roofing-tiles 305 or similar metal covering elements.

It shall be noticed that the roof 300 comprises a under-tile compartment 304 defined by the planking 302 and the above-mentioned metal roof covering 303.

Generally, the under-tile sheet 100, 200 of the invention is received in such compartment 304 arranged under the metal roof covering 303.

In an embodiment of the first example of roof 300, the compartment 304 also comprises a thermal insulation layer 306 arranged above the planking 302. Such insulation layer 306 is manufactured, for example, by synthetic insulating materials (polyurethane, extruded polystyrene foam, synthetized polystyrene foam panels, etc.), mineral fibrous insulating materials (for example, glass wool, rock wool), natural fibrous insulating materials (for example, wood, hemp, cork fiber, etc.). Furthermore, a sheet 401 substantially impermeable to water vapor, or a vapor barrier or vapor retarder sheet, of a type that is known to those skilled in the art, is preferably sandwiched between the planking 302 and the thermal insulation layer 306.

In such embodiment, the under-tile sheet 100, 200 of the invention arranged under the metal roof covering 303 is arranged above the insulating material 306. Such sheet 100, 200 provided with bumps 40 is suitable to create a ventilation chamber under the metal roof covering 303.

In another embodiment of the first example of roof 300 (not shown in the Figures), the sheet 100, 200 with foil 30 with bumps is laid directly on the planking 302 and it is covered by the metal roofing-tiles 305. In this case also, the sheet 100,200 is suitable to create the ventilation chamber under the metal roof covering 303.

In addition, referring again to Fig. 6, the under-tile sheet 100, 200 comprises an adhesive band 17 at a peripheral region of the sheet which is proximate to a selvedge 16. Such adhesive band 17 is coated with a protective release film 18, for example, in paper. Such film 18 is removed during the installation of the sheet 100, 200 onto the roof 300, to allow the adhesion of a surmounting portion 19 of an adjacent sheet.

It shall be noticed that the polymeric foil 30 of the sheet 100,200 at the selvedge 16, i.e., where the adhesive band 17 is located, is free from bumps. Vice versa, the surmounting portion 19 of the adjacent sheet that is overlapped to such selvedge 16 comprises corresponding bumps 40 having a height lower than those located on the rest of the sheet. In such a manner, the overall thickness of the sheets 100, 200 is kept almost unaltered also in the overlapping zone, to ensure the planarity and evenness of the entire slope.

In a second example, with reference to Fig. 7, the roof 400 comprises the supporting structure formed by the beams 301 that are mutually parallel and arranged sloping. Such beams 301 are surmounted by the planking 302 on which the vapor barrier or vapor retarder sheet 401 is laid. The thermal insulation layer 306 is arranged on top of such sheet 401.

Furthermore, the roof 400 comprises a transpiring sheet 307, i.e., at least partially aqueous vapor permeable, extended onto the thermal insulation layer 306 so as to be sandwiched between the insulation layer itself and a further planking 308.

In this case, the under-tile sheet 100, 200 of the invention, is sandwiched between the metal roof covering 303 and such further planking 308, and it is suitable to create the ventilation chamber under the roof covering 303.

The under-tile sheets 100, 200 of the invention have several advantages.

Particularly, the first adhesive membrane 20 ensures a firm and durable adhesion of the polymeric foil 30 provided with bumps 40 to the reinforcement layer 10. In such a case, the sheets 100, 200 do not risk the delamination or release of the polymeric foil 30 during the operative life of the sheets 100, 200.

Furthermore, the system of channels C, C' defined by the bumps 40 of the polymeric foil 30 ensures an easy outflow of both air and the condensation water that may be created under the metal roof covering 303. This ensures a higher life of the same covering, since it avoids corrosion effects of the metal roofing-tiles 305 and prevents the growth of moulds on the wood supporting structure or the thermal insulation layer 306, which is thereby protected.

Furthermore, the air flows that are created under the metal roof covering 303 limit, during the summer, high temperature peaks of such covering.

In addition, given the dimensions of the channels defined by the rows of bumps 40, such channels C, C' are not subjected over time to obstructions due to the build-up of dust or other particles.

Furthermore, the bumps 40 of the foil 30, by virtue of the thickness of the foil itself, ensure a high compression resistance, are stable over time, and are not subjected to degradation and decay.

Furthermore, the under-tile sheet 100, 200 can be indifferently applied either directly above the wood planking 302 (or, optionally, on another support) or above the thermal insulation layer 306.

In this second case, in an embodiment, the sheet 100, 200 is directly secured to the insulation layer 306 by glueing during the installation onto the roof. Alternatively, the sheet 100, 200 is secured to the insulation panel 306 in a final step of the manufacturing of the same panel, or it can be used as a flexible support directly in the manufacturing of such insulating panel 306.

In the sheets 100, 200 of the invention, the adhesive membrane layers 20, 50 and the bumps 40, are configured to uncouple the metal roof covering 303 from the underlying structures of the roof 300, 400 attenuating the vibrations caused by the atmospheric precipitations hitting such roof covering 303. Particularly, the Applicant has verified that the membranes 20, 50 of the sheets 100, 200 comprising a polymeric blend including bitumen, advantageously perform an anti-vibration function when they are applied to roofs with metal roof coverings.

Furthermore, the layer 60, for example, a fibrous layer, acting as a finishing layer, when it is suitably treated to increase the hydrophilicity properties of the sheet 200, is capable of absorbing a possible excess of the condensation water that builds up under the metal roof covering 303. In such a manner, the sheet 200 allows minimizing the decaying effects of the roof wood structures that are caused by the condensation generated in the roof.

## Claims

1. An under-tile multilayer sheet (100; 200) for waterproofing a roof (300; 400) having a metal roof covering,
**characterized in that** it comprises:
- a reinforcement layer (10) having a face (1) and a further opposite face (2);
- a first adhesive membrane (20) connected to the face (1) of the reinforcement layer (10) on at least part of said face surface, said first adhesive membrane being impermeable to water,
wherein said first adhesive membrane (20) comprises an adhesive polymeric blend comprising bitumen, polymers, and a filler;
- a foil (30) in polymeric material connected to said first adhesive membrane (20), said first adhesive membrane being sandwiched between the reinforcement layer (10) and said polymeric material foil (30), said foil (30) in polymeric material having a first face (31) opposite a second face (32) adjacent to the first adhesive membrane (20), said foil (30) comprising a plurality of reliefs (40) on said first face (31).

2. The multilayer sheet (100; 200) according to claim 1, wherein said foil (30) in a polymeric material comprises a plurality of recesses (41) on said second face (32), each recess of said plurality being arranged at a corresponding relief (40) of the first face (31).

3. The multilayer sheet (100; 200) according to claim 1 or 2, wherein said foil (30) in a polymeric material has a thickness (S) ranging between 40 µm and 3 mm.

4. The multilayer sheet (100; 200) according to claim 1, wherein said reliefs (40) of the first face (31) project in a direction substantially orthogonal to said first face (31) and have an average length ranging between 2 mm and 2 cm.

5. The multilayer sheet (100; 200) according to claim 2, wherein both the reliefs (40) of the first face (31) and the recesses (41) of the second face (32) are aligned along a first direction (X) to form a plurality of rows that are mutually parallel along said direction, said reliefs (40) and recesses (41) being aligned along a second direction (Y) orthogonal to the first direction (X) to form a plurality of columns that are mutually parallel, said rows and columns forming a matrix of reliefs (40) and recesses (41).

6. The multilayer sheet (100; 200) according to claim 5, wherein each row of reliefs (40) of the first face (31) of the foil (30) in a polymeric material is at a first distance (d1) from the adjacent rows ranging between 3mm - 2cm.

7. The multilayer sheet (100; 200) according to claim 5, wherein each column of reliefs (40) of the first face (31) of the foil (30) in a polymeric material is at a second distance (d2) from the adjacent columns ranging between 3mm - 2cm.

8. The multilayer sheet (100; 200) according to claim 1, wherein a section of each relief (40) of the first face (31) of the foil (30) along a plane parallel to the foil has a substantially squared shape.

9. The multilayer sheet (100; 200) according to claim 1, wherein the polymeric material of the foil (30) is selected from the group consisting in:
- high-density polyethylene, or HDPE;
- low-density polyethylene, or LDPE;
- polypropylene (PP);
- polyethylene terephthalate (PET);
- polystyrene (PS);
- polyamide (PA).

10. The multilayer sheet (100; 200) according to claim 1, wherein said reinforcement layer (10) has a weight in grams per square meter ranging between 30 and 200 g/m².

11. The multilayer sheet (100; 200) according to claim 1, wherein said reinforcement layer (10) is a fibrous layer made of a material selected from the group consisting in:
- a synthetic fabric or non-woven synthetic fabric;
- glass fiber;
- a synthetic composite fabric or non-woven synthetic composite fabric;
- a natural fabric or non-woven natural fabric;
- a fibrous mesh.

12. The multilayer sheet (200) according to claim 1, further comprising:
- a second adhesive membrane (50) connected to said further face (2) of the reinforcement layer (10) on at least part of the surface of said further face, said second adhesive membrane (50) being analogous to the first membrane (20);
- a finishing layer (60) of the sheet being connected to said second adhesive membrane (50), said second adhesive membrane being sandwiched between the reinforcement layer (10) and said finishing layer (60).

13. The multilayer sheet (200) according to claim 12, wherein said finishing layer (60) is fibrous and it is manufactured in a material selected from the group consisting in:
- a synthetic fabric or non-woven synthetic fabric;
- a composite fabric or non-woven composite fabric;
- a natural fabric or non-woven natural fabric.

14. The multilayer sheet (200) according to claim 12, wherein said finishing layer (60) comprises a polymeric film.

15. The multilayer sheet (200) according to claim 12, wherein said finishing layer (60) comprises a nonstick mineral layer.

16. The multilayer sheet (200) according to the claims 13 and 14, wherein said finishing layer (60) has a weight in grams per square meter ranging between 10 and 80 g/m².

17. A roof (300; 400) of a building comprising:
- a roof supporting structure comprising a plurality of beams (301) surmounted by a planking (302);
- a metal roof covering (303);
- an under-tile compartment (304) sandwiched between said planking (302) and said metal roof covering (303);
- a waterproofing under-tile sheet (100; 200) in accordance with claim 1, which is received in said under-tile compartment (304) arranged under the metal roof covering (303).

18. The roof (300; 400) of a building according to claim 17, further comprising a thermal insulation layer (306) arranged in the under-tile compartment (304) above the planking (302), the waterproofing under-tile sheet (100; 200) being located on top of said thermal insulation layer.

19. The roof (300; 400) of a building according to claim 17, further comprising:
- a thermal insulation layer (306) arranged in the under-tile compartment (304) above the planking (302);
- a transpiring sheet (307) extended onto said thermal insulation layer (306) to be sandwiched between said insulation layer and a further planking (308),
the waterproofing under-tile sheet (100; 200) being sandwiched between the metal roof covering (303) and said further planking (308).

20. The multilayer sheet (100; 200) according to claim 1, wherein said reinforcement layer (10) comprises a film in a polymeric material.

21. Use of a multilayer sheet (100; 200) for waterproofing a roof (300; 400) having a metal roof covering, said sheet being **characterized in that** it comprises:
- a reinforcement layer (10) having a face (1) and a further opposite face (2);
- a first adhesive membrane (20) connected to the face (1) of the reinforcement layer (10) on at least part of said face surface, said first adhesive membrane being impermeable to water,
wherein said first adhesive membrane (20) comprises an adhesive polymeric blend comprising bitumen, polymers, and a filler;
- a foil (30) in a polymeric material connected to said first adhesive membrane (20), said first adhesive membrane being sandwiched between the reinforcement layer (10) and said polymeric material sheet (30), said foil (30) in a polymeric material having a first face (31) opposite a second face (32) adjacent to the first adhesive membrane (20), said foil (30) comprising a plurality of reliefs (40) on said first face (31).

## Patentansprüche

1. Mehrschichtige Unterdeckbahn (100; 200) zur Wasserabdichtung eines eine Metalldachbedeckung aufweisenden Dachs (300; 400), **dadurch gekennzeichnet, dass** sie aufweist:
- eine Verstärkungsschicht (10), die eine Seite (1) und eine weitere entgegengesetzte Seite (2) aufweist;
- einen ersten Haftfilm (20), der mit der Seite (1) der Verstärkungsschicht (10) auf zumindest einem Teil der Seitenoberfläche verbunden ist,
wobei der erste Haftfilm wasserundurchlässig ist, wobei der erste Haftfilm (20) ein haftfähiges Polymergemisch aufweist, das Bitumen, Polymere und ein Füllmittel aufweist;
- eine Polymermaterial-Folie (30), die mit dem ersten Haftfilm (20) verbunden ist, wobei der erste Haftfilm zwischen die Verstärkungsschicht (10) und die Polymermaterialfolie (30) geschichtet ist, wobei die Polymermaterial-Folie (30) eine erste Seite (31) aufweist, die einer dem ersten Haftfilm (20) benachbarten zweiten Seite (32) entgegengesetzt ist, wobei die Folie (30) auf der ersten Seite (31) mehrere Reliefs (40) aufweist.

2. Die mehrschichtige Bahn (100; 200) nach Anspruch 1, wobei die Polymermaterial-Folie (30) auf der zweiten Seite (32) eine Mehrzahl von Vertiefungen (41) aufweist, wobei jede Vertiefung der Mehrzahl an einem entsprechenden Relief (40) der ersten Seite (31) angeordnet ist.

3. Die mehrschichtige Bahn (100; 200) nach Anspruch 1 oder 2, wobei die Polymermaterial-Folie (30) eine Dicke (S) im Bereich zwischen 40 µm und 3 mm hat.

4. Die mehrschichtige Bahn (100; 200) nach Anspruch 1, wobei die Reliefs (40) der ersten Seite (31) in Richtung im Wesentlichen orthogonal zu der ersten Seite (31) vorstehen und eine durchschnittliche Länge im Bereich zwischen 2 mm und 2 cm haben.

5. Die mehrschichtige Bahn (100; 200) nach Anspruch 2, wobei sowohl die Reliefs (40) der ersten Seite (31) als auch die Vertiefungen (41) der zweiten Seite (32) entlang einer ersten Richtung (X) ausgerichtet sind, um eine Mehrzahl von Reihen zu bilden, die entlang der Richtung zueinander parallel sind, wobei die Reliefs (40) und die Vertiefungen (41) entlang einer zweiten Richtung (Y) orthogonal zu der ersten Richtung (X) ausgerichtet sind, um eine Mehrzahl von Spalten zu bilden, die zueinander parallel sind, wobei die Reihen und Spalten eine Matrix von Reliefs (40) und Vertiefungen (41) bilden.

6. Die mehrschichtige Bahn (100; 200) nach Anspruch 5, wobei jede Reihe von Reliefs (40) der ersten Seite (31) der Polymermaterial-Folie (30) einen ersten Abstand (d1) von den benachbarten Reihen im Bereich zwischen 3 mm - 2 cm hat.

7. Die mehrschichtige Bahn (100; 200) nach Anspruch 5, wobei jede Spalte von Reliefs (40) der ersten Seite (31) der Polymermaterial-Folie (30) einen zweiten Abstand (d2) von den benachbarten Spalten im Bereich zwischen 3 mm - 2 cm hat.

8. Die mehrschichtige Bahn (100; 200) nach Anspruch 1, wobei ein Abschnitt jedes Reliefs (40) der ersten Seite (31) der Folie (30) entlang einer zur Folie parallelen Ebene eine im Wesentlichen quadratische Form hat.

9. Die mehrschichtige Bahn (100; 200) nach Anspruch 1, wobei das Polymermaterial der Folie (30) ausgewählt ist aus der Gruppe, bestehend in:
- hochdichtes Polyethylen oder HDPE;
- niedrigdichtes Polyethylen oder LDPE;
- Polypropylen (PP);
- Polyethylen-Terephtalat (PET);
- Polystyrol (PS);
- Polyamid (PA).

10. Die mehrschichtige Bahn (100; 200) nach Anspruch 1, wobei die Verstärkungsschicht (10) ein Gewicht in Gramm pro Quadratmeter im Bereich zwischen 30 und 200 g/m² hat.

11. Die mehrschichtige Bahn (100; 200) nach Anspruch 1, wobei die Verstärkungsschicht (10) eine faserige Schicht ist, die aus einem Material hergestellt ist, das aus der Gruppe ausgewählt ist, bestehend in:
- Synthetikfaser oder nicht-gewobene Synthetikfaser;
- Glasfaser;
- synthetisches Komposittuch oder nicht-gewobenes synthetisches Komposittuch;
- natürliches Tuch oder nicht-gewobenes natürliches Tuch;
- Fasergitter.

12. Die mehrschichtige Bahn (200) nach Anspruch 1, die ferner aufweist:
- einen zweiten Haftfilm (50), der mit der weiteren Seite (2) der Verstärkungsschicht (10) auf zumindest einem Teil der Oberfläche der weiteren Seite verbunden ist, wobei der zweite Haftfilm (50) analog zum ersten Film (20) ist,
- eine Endschicht (60) der Bahn, die mit dem zweiten Haftfilm (50) verbunden ist, wobei der zweite Haftfilm zwischen die Verstärkungsschicht (10) und die Endschicht (60) geschichtet ist.

13. Die mehrschichtige Bahn (200) nach Anspruch 12, wobei die Endschicht (60) fasrig ist und aus einem Material hergestellt ist, das aus der Gruppe ausgewählt ist, bestehend in:
- Synthetiktuch oder nicht-gewobenes Synthetiktuch;
- Komposittuch oder nicht-gewobenes Komposittuch;
- natürliches Tuch oder nicht-gewobenes natürliches Tuch.

14. Die mehrschichtige Bahn (200) nach Anspruch 12, wobei die Endschicht (60) einen Polymerfilm aufweist.

15. Die mehrschichtige Bahn (200) nach Anspruch 12, wobei die Endschicht (60) eine nicht-haftende Mineralschicht aufweist.

16. Die mehrschichtige Bahn (200) nach den Ansprüchen 13 und 14, wobei die Endschicht (60) ein Gewicht in Gewicht in Gramm pro Quadratmeter im Bereich zwischen 10 und 80 g/m² hat.

17. Dach (300; 400) eines Gebäudes, welches aufweist:
- eine Dachträgerstruktur, die eine Mehrzahl von Balken (301) aufweist, auf denen eine Beplankung (302) angebracht ist;
- eine Metalldachbedeckung (303);
- ein Unterdeckabteil (304), das zwischen die Beplankung (302) und die Metalldachbedeckung (303) geschichtet ist;
- eine wasserdichte Unterdeckbahn (100; 200) nach Anspruch 1, die in dem unter der Metalldachbedeckung (303) angeordneten Unterdeckabteil (304) aufgenommen ist.

18. Das Dach (300; 400) eines Gebäudes nach Anspruch 17, das ferner eine Wärmeisolierschicht (306) aufweist, die in dem Unterdeckabteil (304) über der Beplankung (302) angeordnet ist, wobei die wasserdichte Unterdeckbahn (100; 200) oben auf der Wärmeisolierschicht angeordnet ist.

19. Das Dach (300; 400) eines Gebäudes nach Anspruch 17, das ferner aufweist:
- eine Wärmeisolierschicht (306), die in dem Unterdeckabteil (304) über der Beplankung (302) angeordnet ist;
- eine Schwitzbahn (307), die sich auf die Wärmeisolierschicht (306) erstreckt, so dass sich zwischen die Isolierschicht und einer weitere Beplankung (308) geschichtet ist,
wobei die wasserdichte Unterdeckbahn (100; 200) zwischen die Metalldachbedeckung (303) und die weitere Beplankung (308) geschichtet ist.

20. Die mehrschichtige Bahn (100; 200) nach Anspruch 1, wobei die Verstärkungsschicht (10) einen Polymermaterial-Film aufweist.

21. Verwendung einer mehrschichtigen Bahn (100; 200) zur Wasserabdichtung eines eine Metalldachbedeckung aufweisenden Dachs (300; 400), wobei die Bahn **dadurch gekennzeichnet ist, dass** sie aufweist:
- eine Verstärkungsschicht (10) mit einer Seite (1) und einer weiteren entgegengesetzten Seite (2);
- - einen ersten Haftfilm (20), der mit der Seite (1) und der Verstärkungsschicht (10) auf zumindest einem Teil der Seitenoberfläche verbunden ist, wobei der erste Haftfilm wasserundurchlässig ist,
wobei der erste Haftfilm (20) ein haftfähiges Polymergemisch aufweist, das Bitumen, Polymere und ein Füllmittel aufweist;
- eine Polymermaterial-Folie (30), die mit dem ersten Haftfilm (20) verbunden ist, wobei der erste Haftfilm zwischen die Verstärkungsschicht (10) und die Polymermaterialfolie (30) geschichtet ist, wobei die Polymermaterial-Folie (30) eine erste Seite (31) aufweist, die einer dem ersten Haftfilm (20) benachbarten zweiten Seite (32) entgegengesetzt ist, wobei die Folie (30) auf der ersten Seite (31) mehrere Reliefs (40) aufweist.

## Revendications

1. Plaque multicouche sous tuile (100 ; 200) pour l'imperméabilisation d'un toit (300 ; 400) ayant une couverture de toit métallique,
**caractérisée en ce qu'**elle comprend :
- une couche de renforcement (10) ayant une face (1) et une autre face opposée (2) ;
- une première membrane adhésive (20) reliée à la face (1) de la couche de renforcement (10) sur au moins une partie de la surface de ladite face, ladite première membrane adhésive étant imperméable à l'eau,
dans laquelle ladite première membrane adhésive (20) comprend un mélange polymère adhésif comprenant du bitume, des polymères et une charge ;
- une feuille (30) en matériau polymère reliée à ladite première membrane adhésive (20), la dite première membrane adhésive étant prise en sandwich entre la couche de renforcement (10) et ladite feuille en matériau polymère (30), ladite feuille (30) en matériau polymère ayant une première face (31) opposée à une deuxième face (32) adjacente à la première membrane adhésive (20), ladite feuille (30) comprenant une pluralité de reliefs (40) sur ladite première face (31).

2. Plaque multicouche (100 ; 200) selon la revendication 1, dans laquelle ladite feuille (30) en matériau polymère comprend une pluralité d'évidements (41) sur ladite deuxième face (32), chaque évidement de ladite pluralité étant disposé au niveau d'un relief correspondant (40) de la première face (31).

3. Plaque multicouche (100 ; 200) selon la revendication 1 ou 2, dans laquelle ladite feuille (30) en matériau polymère a une épaisseur (S) comprise entre 40 µm et 3 mm.

4. Plaque multicouche (100 ; 200) selon la revendication 1, dans laquelle lesdits reliefs (40) de la première face (31) se projettent dans une direction sensiblement perpendiculaire à ladite première face (31) et ont une longueur moyenne comprise entre 2 mm et 2 cm.

5. Plaque multicouche (100 ; 200) selon la revendication 2, dans laquelle les reliefs (40) de la première face (31) tout comme les évidements (41) de la deuxième face (32) sont alignés suivant une première direction (X) pour former une pluralité de rangées qui sont parallèles les unes par rapport aux autres le long de ladite direction, lesdits reliefs (40) et évidements (41) étant alignés le long d'une deuxième direction (Y) perpendiculaire à la première direction (X) pour former une pluralité de colonnes qui sont parallèles les unes par rapport aux autres, lesdites rangées et colonnes formant une matrice de reliefs (40) et d'évidements (41).

6. Plaque multicouche (100 ; 200) selon la revendication 5, dans laquelle chaque rangée de reliefs (40) de la première face (31) de la feuille (30) en matériau polymère est à une première distance (d1) comprise entre 3 mm et 2 cm des rangées adjacentes.

7. Plaque multicouche (100 ; 200) selon la revendication 5, dans laquelle chaque colonne de reliefs (40) de la première face (31) de la feuille (30) en matériau polymère est à une seconde distance (d2) comprise entre 3 mm et 2 cm des colonnes adjacentes.

8. Plaque multicouche (100 ; 200) selon la revendication 1, dans laquelle une section de chaque relief (40) de la première face (31) de la feuille (30) le long d'un plan parallèle à la feuille a une forme sensiblement carrée.

9. Plaque multicouche (100 ; 200) selon la revendication 1, dans laquelle le matériau polymère de la feuille (30) est choisi dans le groupe constitué par :
- un polyéthylène haute densité, ou HDPE ;
- un polyéthylène basse densité, ou LDPE ;
- un polypropylène (PP) ;
- un poly(téréphtalate d'éthylène) (PET) ;
- un polystyrène (PS) ;
- un polyamide (PA).

10. Plaque multicouche (100 ; 200) selon la revendication 1, dans laquelle ladite couche de renforcement (10) a un poids en gramme par mètre carré compris entre 30 et 200 g/m².

11. Plaque multicouche (100; 200) selon la revendication 1, dans laquelle ladite couche de renforcement (10) est une couche fibreuse constituée d'un matériau choisi dans le groupe constitué par :
- un tissu synthétique ou un tissu synthétique non tissé ;
- une fibre de verre ;
- un tissu composite synthétique ou un tissu composite synthétique non tissé ;
- un tissu naturel ou un tissu naturel non tissé ;
- une maille fibreuse.

12. Plaque multicouche (200) selon la revendication 1, comprenant en outre :
- une deuxième membrane adhésive (50) reliée à ladite autre face (2) de la couche de renforcement (10) sur au moins une partie de la surface de ladite autre face, ladite deuxième membrane adhésive (50) étant analogue à la première membrane (20) ;
- une couche de finition (60) de la plaque étant reliée à ladite deuxième membrane adhésive (50), ladite deuxième membrane adhésive étant prise en sandwich entre la couche de renforcement (10) et ladite couche de finition (60).

13. Plaque multicouche (200) selon la revendication 12, dans laquelle ladite couche de finition (60) est fibreuse et est fabriquée dans un matériau choisi dans le groupe constitué par :
- un tissu synthétique ou un tissu synthétique non tissé ;
- un tissu composite ou un tissu composite non tissé ;
- un tissu naturel ou un tissu naturel non tissé.

14. Plaque multicouche (200) selon la revendication 12, dans laquelle ladite couche de finition (60) comprend un film polymère.

15. Plaque multicouche (200) selon la revendication 12, dans laquelle ladite couche de finition (60) comprend une couche minérale antiadhésive.

16. Plaque multicouche (200) selon les revendications 13 et 14, dans laquelle ladite couche de finition (60) a un poids en gramme par mètre carré compris entre 10 et 80 g/m².

17. Toit (300 ; 400) d'un bâtiment comprenant :
- une structure de support de toit comprenant une pluralité de poutres (301) surmontées de planches (302) ;
- une couverture de toit métallique (303) ;
- un compartiment sous tuile (304) pris en sandwich entre lesdites planches (302) et ladite couverture de toit métallique (303) ;
- une plaque sous tuile imperméable (100 ; 200) selon la revendication 1, qui se loge dans ledit compartiment sous tuile (304) placé sous la couverture de toit métallique (303).

18. Toit (300 ; 400) d'un bâtiment selon la revendication 17, comprenant en outre une couche d'isolation thermique (306) disposée dans le compartiment sous tuile (304) au-dessus des planches (302), la plaque sous tuile imperméable (100 ; 200) étant placée au-dessus de ladite couche d'isolation thermique.

19. Toit (300 ; 400) d'un bâtiment selon la revendication 17, comprenant en outre :
- une couche d'isolation thermique (306) disposée dans le compartiment sous tuile (304) au-dessus des planches (302) ;
- une feuille transpirante (307) étendue sur ladite couche d'isolation thermique (306) pour être prise en sandwich entre ladite couche d'isolation et des planches supplémentaires (308),
la plaque sous tuile imperméable (100 ; 200) étant prise en sandwich entre la couverture de toit métallique (303) et lesdites planches supplémentaires (308).

20. Plaque multicouche (100 ; 200) selon la revendication 1, dans laquelle ladite couche de renforcement (10) comprend un film en matériau polymère.

21. Utilisation d'une plaque multicouche (100 ; 200) pour l'imperméabilisation d'un toit (300 ; 400) ayant une couverture de toit métallique, ladite plaque étant **caractérisée en ce qu'**elle comprend :
- une couche de renforcement (10) ayant une face (1) et une autre face opposée (2) ;
- une première membrane adhésive (20) reliée à la face (1) de la couche de renforcement (10) sur au moins une partie de la surface de ladite face, ladite première membrane adhésive étant imperméable à l'eau,
où ladite première membrane adhésive (20) comprend un mélange polymère adhésif comprenant du bitume, des polymères et une charge ;
- une feuille (30) en matériau polymère reliée à ladite première membrane adhésive (20), ladite première membrane adhésive étant prise en sandwich entre la couche de renforcement (10) et ladite feuille en matériau polymère (30), ladite feuille (30) en matériau polymère ayant une première face (31) opposée à une deuxième face (32) adjacente à la première membrane adhésive (20), ladite feuille (30) comprenant une pluralité de reliefs (40) sur ladite première face (31).
